Europäisches Patentamt

European Patent Office

Office européen des brevets

(11) Publication number: **0 150 658**
**B1**

# (12) EUROPEAN PATENT SPECIFICATION

(45) Date of publication of patent specification: 16.08.89

(51) Int. Cl.⁴: **G 01 P 5/18,** G 01 P 3/80

(21) Application number: 84630214.9

(22) Date of filing: 28.12.84

(54) A method and apparatus for headbox jet velocity measurement.

(30) Priority: 24.01.84 US 573387

(43) Date of publication of application:
07.08.85 Bulletin 85/32

(45) Publication of the grant of the patent:
16.08.89 Bulletin 89/33

(84) Designated Contracting States:
BE CH DE FR GB IT LI NL SE

(56) References cited:
EP-A-0 065 906
DE-A-2 401 322
US-A-3 487 686

PATENTS ABSTRACTS OF JAPAN, vol. 8, no.
58 (P-261)1495r, 16th March 1984; & JP - A - 58
205 858 (MITSUBISHI JUKOGYO K.K.) 30-11-
1983

REVIEW OF SCIENTIFIC INSTRUMENTS, vol.
49, no. 8, August 1978, pages 1090-1094,
American Institute of Physics, New York, US;
(73) Proprietor: BELOIT CORPORATION
P.O. Box 350
Beloit Wisconsin 53511 (US)

(72) Inventor: Parker, Daniel
660 McCurry Road
Caledonia Illinois (US)

(74) Representative: Dennemeyer, John James et al
DENNEMEYER & ASSOCIATES Steinstrasse 44
D-8000 München 80 (DE)
(56) References cited:
N. ABUAF et al.: "Optical probe for local void
fraction and interface velocity measurements"

JOURNAL OF PHYSICS E. SCIENTIFIC
INSTRUMENTS, vol. 16, no. 7, July 1983, pages
706-709, The Institute of Physics, London, GB;

D.R. ANDREWS: "A versatile laboratory
correlator with application to determine
particle velocity in an erosion test"

Courier Press, Leamington Spa, England.

EP 0 150 658 B1

# EP 0 150 658 B1

**Description**

The present invention relates to an apparatus for measuring the velocity of a liquid jet of the kind defined in the pre-characterizing portion of claim 1.

Such an apparatus is disclosed by DE—A—2 401 322. The known apparatus may be used for measuring the velocity of a liquid jet with or without contact of the sensors and the jet. It comprises a single fiberoptic structure consisting of three distinct fiber bundles, two of which are spaced apart by a relatively small fixed distance and embedded in the fibers of the third fiber bundle over a portion of their length extending between their ends facing the jet and a midway branching-off position. Each of the spaced apart fiber bundles extends between the jet and a respective one of a pair of phototransistors whereas the third bundle extends between the jet and a light source with a fixed light intensity. The electrical signals generated by the phototransistors on receipt of light reflected back from the jet through the pair of spaced apart fiber bundles are fed directly into a pair of amplifiers without passing them through a filter before they are amplified.

An object of the invention is to provide an apparatus of the kind defined in the pre-characterizing portion of claim 1, which apparatus permits a jet velocity measurement only without contact between the jet and the fiberoptic coupling means and provides a more accurate measurement of the jet velocity under very adverse conditions in an environment in which the jet angle and the jet velocity may vary.

To this end, according to the invention, an apparatus for measuring the velocity of a liquid jet of the kind defined in the pre-characterizing portion of claim 1 is characterized in that each of said first and second fiberoptic light coupling means comprises a respective one of a pair of spaced apart bifurcated first and second fiber bundles, said first fiber bundle including a first, second and third end thereof, said first end being disposed adjacent to the liquid jet, said second end being disposed adjacent to said first light sensing means and said third end being disposed adjacent to said light generating means; said second fiber bundle including a first, second and third end, said first end of said second fiber bundle being disposed adjacent to the liquid jet at said downstream disposition thereof and downstream relative to said first end of said first fiber bundle, said second end of said second fiber bundle being disposed adjacent to said second light sensing means and said third end of said second fiber bundle being disposed adjacent to said light generating means; the light intensity of the light generating means is adjustable to vary the penetration of the light into the jet and the depth at which the velocity is measured; high-pass filter means are connected to said first and second light sensing means for filtering out components of said first and second signals below a predetermined frequency; amplifier means are connected to said high-pass filter means for amplifying the filtered first and second signals, said analyzing means being connected to said amplifier means to cross-correlate the A.C. components of the amplified first and second signals; and adjustable mounting means are connected to said first and second fiber bundles for permitting adjustment of the spacing between the first and second fiber bundles relative to the surface of the liquid jet; and said liquid jet consists of pulp ejected from a paper machine headbox.

An embodiment of the invention will now be described by way of example and with reference to the accompanying drawings, in which:

Fig. 1 is a schematic representation of a pair of light sensors spaced apart and positioned above a headbox jet;

Fig. 2 is a side view of the jet end of a headbox adapted for using the present invention, showing the present invention in schematic form;

Fig. 3 is an enlarged view of a pair of bifurcated fiber optics fed by a single source and feeding a pair of photodiodes;

Fig. 4 is a schematic illustration of the light spot geometry, particularly light spot length and width;

Fig. 5 is a schematic illustration of light spot misalignment or skew with respect to the direction of flow;

Fig. 6 is a graphic illustration showing calibration of the present flow meter against a laser Doppler anemometer;

Fig. 7 is a graphic illustration of signal penetration and skew due to changes in jet velocity;

Fig. 8 is a graphic illustration comparing the cross-correlated jet velocity with the jet velocity calculated from the headbox pressure;

Figs. 9 and 10 are graphic, strip chart illustrations of a paper machine run from start-up to shut-down, with Fig. 9 illustrating constant velocity from start to shutdown and Fig. 10 illustrating a run having the flow dropped in stages prior to shutdown;

Fig. 11 is a graphic illustration of data taken over a series of runs at varying flow rates and slice openings;

Fig. 12 and Fig. 13 are graphic illustrations of paper machine runs of different flow rate with all other conditions constant;

Fig. 14 is a graphic illustration of cross-correlation coefficients with respect to the velocity of the two runs of Figs. 12 and 13;

Fig. 15 is a graphic illustration of errors introduced into the system by sensor distance above the headbox jet;

Fig. 16 is a graphic illustration of error introduced by horizontal skew of the sensing positions with respect to the direction of flow of the headbox jet; and

2

Fig. 17 is a graphic illustration of the error introduced by vertical skew of the sensing positions.

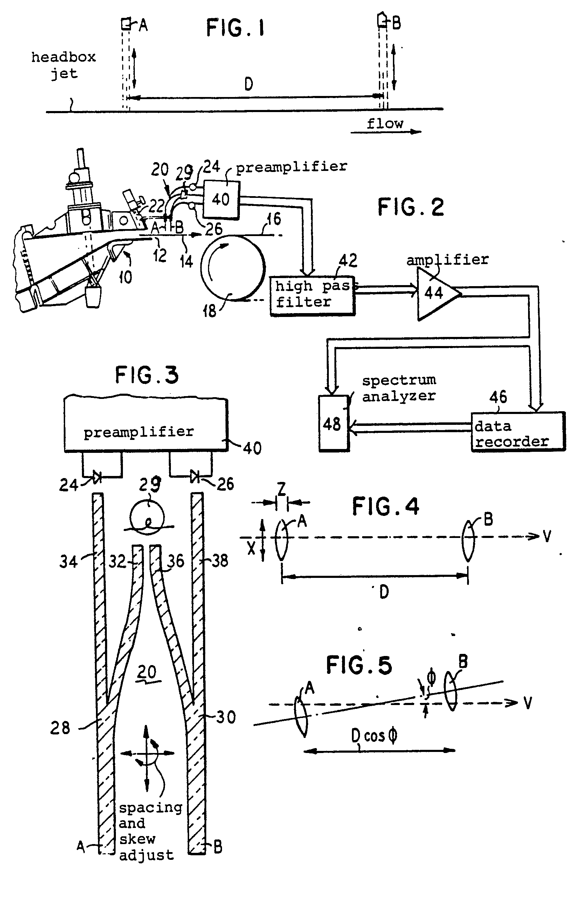

Referring to Fig. 1, the cross-correlation flow meter of the present invention measures the time required for surface and internal patterns of the headbox jet to move from a first sensor position A to a second sensor position B which is directly downstream from the sensor position A. Using this time $\theta$ and the distance between the sensors, the velocity of the flow can be calculated as $V=D/\theta$.

Cross-correlation is the technique used to calculate the transit time from the output of the sensors. The sensors each have an AC component $f_A(t)$ and $f_B(t)$. In the ideal case, $f_B(t)$ will be identical with $f_A(t)$, the time delayed by $\theta$, so that $f_A(t)=f_B(t+\theta)$.

The cross-correlation function compares these two signals and obtains an output $R_{AB}(t)$ that has a maximum at $\theta$

$$R_{AB}(t)=\frac{1}{P}\int_O^P f_A(t)\ f_B(t+\theta)\ dt,$$

where P is an integrating interval. The equivalent digital algorithm is

$$R_{AB}(k)=\frac{1}{N}\sum_{k=1}^N f_A\ (k\Delta t)\ f_B(k\Delta t=j).$$

In any real system there will be noise, whether the noise arises from misalignment of the sensors, signal distortion or external electromagnetic interference. If the noise is represented by $f_N(t)$, then the relation between the sensor outputs becomes

$$f_A(t)=f_B(t+\theta)+f_N(t).$$

By substituting the above into the cross-correlation equation one obtains

$$R_{AB}(t)=\frac{1}{P}\int_O^P f_A(t)\ [f_B(t+\theta)+f_N(t)]\ dt.$$

Separation of the integrals then provides

$$R_{AB}(t)=\frac{1}{P}\int_O^P f_A(t)\ f_B(t+\theta)\ dt+\frac{1}{P}\int_O^P f_A(t)f_N(t)\ dt.$$

If there is no relation between $f_A(t)$ and $F_N(t)$ then the second interval will tend toward zero. If, however, the component $f_A(t)$ contains a noise component that is common mode to the component $f_N(t)$, the output $R_{AB}(t)$ will show a strong peak at t=0. This is a particular problem with 60 Hz and 120 Hz interference. The functions $f_A(t)$ and $f_B(t)$ both have power spectrums that will be high frequency limited, with a bandwidth BW. The peak of the cross-correlation function $R_{AB}(t)$ centered at $\theta$ will have a width at its midpoint of 1/BW. In order to obtain an accurate value for the maximum output $R_{AB}(\theta)$ it is desirable that the peak width 1/BW be as narrow as possible. Therefore, the larger the bandwidth, the more accurate the measured value of $\theta$.

The accuracy of the time interval $\theta$ is also related to the integrating period P. The larger P is, the less variation $\theta$ will have, however, for velocity measurement the fast response time is also desirable. The integrating peroid P should be selected with both of these factors in mind.

High pass filtering will improve the sharpness of the P at $\theta$ and eliminate low frequency noise. Care must be taken, however, in selecting the cutoff frequency so as to not to affect signal strength or bandwidth.

One construction in this investigation utilize sensors comprising a light emitting diode source focussed on the jet through a lens. The reflected signal was focused on a photodiode matched to the light emitting diode. With this structure, the strong signal could not be obtained when the light emitting diode and photodiode were at their focal point. Positioning of the sensors was critical, and any change in the jet angle required repositioning of the sensors. The low power of the light emitting diode made it necessary to position the sensors very close to the jet. This gave, as mentioned above, a very noisy signal and splashing would frequently obscure the lens and block the signal entirely.

Referring to Figs. 2 and 3, the above disadvantage was overcome, i.e. the positioning sensitivity was alleviated, by providing bifurcated fiber optic bundles light-coupling a light source to a pair of sensors, such as PIN diodes. As a light source, an incandescent source was employed which could be varied in intensity. This solved the problem of a low power source, and the fiber optics minimize the effects of splashing.

The signals from the photodiode were fed to and filter by a 200 Hz high pass filter, amplified and stored

3

for later analysis. For the analysis, a FFT Ubiquitous two-channel spectrum analyzer was used for data analysis.

In Figs. 2 and 3, the jet end of a headbox is generally illustrated at 10 as comparing a slice 12 for forming a jet 14 which is delivered onto a Fourdrinier wire 16 carried on a roll 18, which for purpose of clarity has been illustrated to the right of the headbox slice 12, rather than below and immediately adjacent thereto. The sensing positions A and B of Fig. 1 are illustrated above the jet 14 as spaced apart in the direction of flow.

A fiber optic structure 20 couples a light source 29, here an incandescent lamp, to a pair of light sensors, here photodiodes, 24 and 26, by way of reflection from the headbox jet 14.

As best seen in Fig. 3, the fiber optic structure 20 comprises a pair of fiber optic bundles 28 and 30. Each of the fiber optic bundles is bifurcated, as illustrated at 32—38, so that the light source 28 feeds the bifurcations 32 and 36 to transmit a pair of light beams towards the headbox jet, while the bifurcations 34 and 38 support light reflections from the jet to the respective photodiodes 24 and 26.

Turning back to Fig. 2, the electrical signals generated by the photodiodes are fed to a preamplifier 40 before being applied to a high pass filter 42, for example a 200 Hz high pass filter. The filtered signals are then amplified by an amplifier 44 and fed to a data recorder 46 and to a spectrum analyzer 48.

In this investigation, tests were made on the cross-correlation velicometer of the present invention to determine accuracy, linearity, operation in an adverse environment and positioning effects on velocity measurement.

In these tests, those relating to accuracy, linearity and positioning errors were first performed in a fluid mechanism lab flow loop. All of the results, which are set forth below, were calibrated against a laser Doppler anemometer. The effect of signal penetration into the jet and the effects of the jet surface characteristics on the correlated velocity were also determined. Subsequently, the velicometer was operated in conjunction with an experimental paper machine for an extended study of operation in that environment. As will be evident from the discussion below, the results were compared to the calculated headbox flow velocities and to the results from the test in the fluid mechanic lab.

A final set of tests were performed with a large flow loop to compare the cross-correlated velocity against the velocity calculated from a pitot tube measurement. All of these results are also set forth below.

In determining measurement errors, the cross-correlation coefficient and signal-to-noise ratio were determined. The cross-correlation coefficient XCC is a measure of the degree to which the signal $f_A(t)$ and $f_B(t)$ contribute to the correlation peak $R_{AB}(\theta)$. The cross-correlation coefficient is calculated by the expression:

$$XCC = \frac{R_{AB}(\theta)}{[R_{AA}(0) \cdot R_{BB}(0)]^{1/2}}$$

where a value of "1" is for identical signals, and the value "0" is for signals having no similarity.

The signal-to-noise ratio S/N is calculated by dividing the mean of the signals autocorrelation $R_{AA}(0)$ by the autocorrelation $R_{NN}(0)$ of the noise function in accordance with the expression

$$S/N = \frac{R_{AA}(0)}{R_{NN}(0)} \cdot$$

As to light spot geometry, and in reference to Fig. 4, the signal $f_A(t)$ and $f_B(t)$ are the AC components of the backscattering of two light spots on the surface of the headbox jet. The light spots have a finite area, so that the signals measured therefrom will be instantaneous averages of the events taking place across their areas. The shape and alignment of the spots will affect the quality and accuracy of the signals.

Increasing the spot widths across the flow direction (here the $x$ direction) provides the sensors a larger field of view, with more points of similarity than can be correlated. This increases the degree of correlation or the correlation coefficient XCC, and the signal-to-noise ratio. The light spot width is limited to the view of the sensors, and it serves no purpose to increase the same further.

Decreasing the spot length in the flow direction (here the $z$ direction) narrows the averaging area of the light spot, which increases the bandwidth. This provides a sharp peak at $R_{AB}(\theta)$; however, if the length is decreased too much it will affect the signal strength.

Referring to Fig. 5, misalignment of the light spots in the flow direction, that is in the $z$ direction, introduces a cosine error into the separation distance D, and decreases the cross-correlation coefficient XCC. If the misalignment is great enough, the light spots will have no points of similarity along the flow and the degree of correlation will be zero. Increasing the spot width, of course, helps to alleviate this problem.

The positioning of the sensing optics over the headbox jet introduces some errors which are related to the light spot and cosine errors. In the test to determine these errors, a circular light spot 1.982 mm in diameter was used, and the sensors were separated by 5.974 mm. The parameters investigated were the distance from the jet surface, the horizontal skew, the vertical skew and the sensor separation.

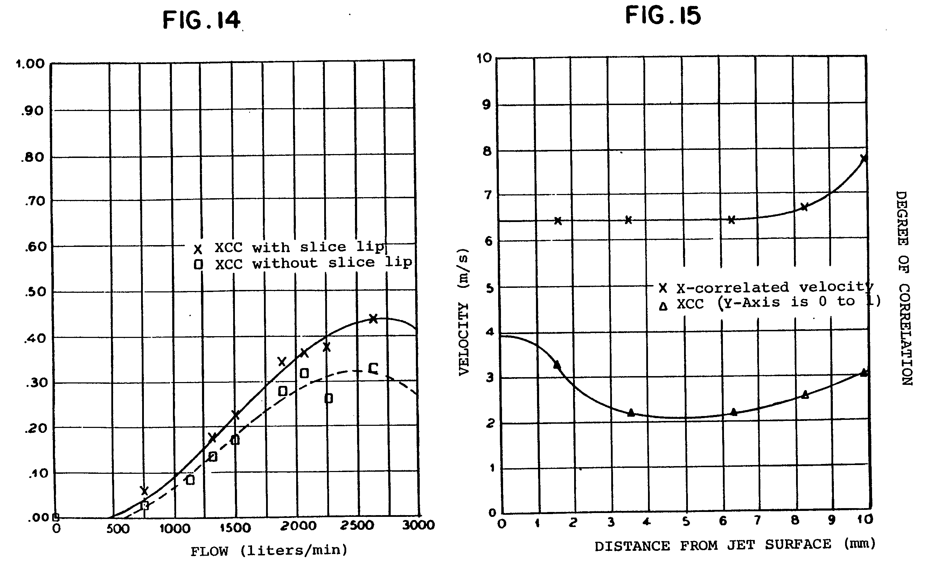

The distance of the sensors from the jet surface did not introduce significant error into the correlated velocity if kept within certain limits. This is largely due to the use of fiber optics, which hold the spot size much more constant than a lens. As the sensors are moved away from the jet surface, the spot size begins to increase, narrowing the effective bandwidth and causing the correlation peak to broaden. The cross-correlation coefficient XCC is also decreased, giving a lower signal-to-noise ratio. At approximately 6.35 mm from the jet surface, the light spots begin to overlap. This overlapping shifts the averaging areas of the sensors towards one another, causing the sensor separation distance to appear smaller and the velocity to increase as illustrated in Fig. 15.

Skewing the sensors horizontally to the flow direction introduces a cosine error, as mentioned above, in the distance D and lowers the signal-to-noise ratio by reducing the area of the spots that is correlatable in that the distance is now a distance D' in accordance with the relationship

$$D'=D\cos\theta.$$

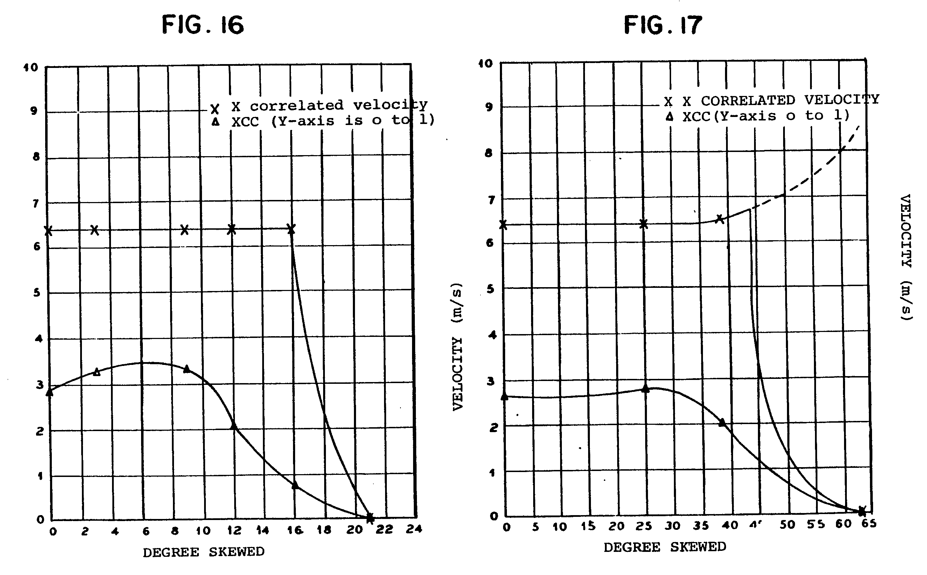

From the investigations, cosine error proves negligible compared to the sampling period errors of the cross-correlation process. The positioning of the peak $R_{AB}(\theta)$ is not affected by such skewing until the limit of the sensor alignment is reached. The decrease in the signal-to-noise ratio as the areas of similarity in the light spots decrease is consistent with expected performance, as is indicated in Fig. 16.

The separation between the sensor positions is very critical for the operation of a device constructed in accordance with the present invention. An increase of the sensor position spacing will provide the surface characteristics of the jet with more time to change between the light spots. This will increase the signal-to-noise ratio until the correlation is eventually lost. Decreasing the sensor position spacing provides a better correlation, but with the smaller transit times between the sensor positions, the correlation instrument will have a larger uncertainty in the time delay $\theta$ measured.

The minimum spacing to maintain measuring period uncertainties within 0.5% may be calculated by the expression

$$D_{min}=100 \text{ PV/N.}$$

The minimum spacing is also limited by the size and shape of the light spots.

The turbulence signal loss does not affect the position of the $R_{AB}(\theta)$ peak, so that it does not become a significant factor in the cross-correlation function until the signal-to-noise ratio is reduced significantly. The light spot size produces a filtering and averaging effect on the signals such that its $z$ width can be used to calculate an approximate maximum sensor position separation in accordance with the expression $D_{max}=jw$, so that the limits on the value D are

$$jw \geq D \geq 100 \text{ PV/N.}$$

Further errors are introduced by the signal penetration into the jet. These errors are:
(1) Signal loss-low cross-correlation coefficient XCC;
(2) Reflection from the bottom of the jet-$R_{AB}(\theta)$ shift and/or broaden; and
(3) Averaging of vertical velocity profile-narrower-and width and $R_{AB}(\theta)$ shift.

The first error (1) does not directly affect the time position of the cross-correlation function. Its main effect is a reduction in signal strength, which is only significant in clear solutions with very little turbulence.

In the second source or error (2), a portion of the signal is transmitted through the jet to its bottom surface where it is reflected back to the sensors. If the bottom surface of the jet is travelling at a slightly different velocity from the top surface, the relationship of the signal $f_A(t)$ and $f_B(t)$ becomes

$$f_A(t)=\frac{A_0 f_B(t+\theta_1)+A_1 f_B(t+\theta_2)}{A_0+A_1}.$$

Then the cross-correlation function is:

$$R_{AB}(t)=\frac{1}{P}\int_0^P f_A(t)\left[\frac{A_0 f_B(t+\theta_1)+A_1 f_B(t+\theta_2)}{A_0+A_1}\right]dt$$

$$=\frac{A_0}{P(A_0+A_1)}\int_0^P f_A(t)f_B(t+\theta_1)dt+\frac{A_1}{P(A_0+A_1)}\int_0^P f_A(t)f_B(t+\theta_2)dt.$$

This will provide a peak at $\theta_1$ and $\theta_2$. With flows of nearly the same velocities, only one peak will show up in the cross-correlation function, but it will be broadened and shifted in time.

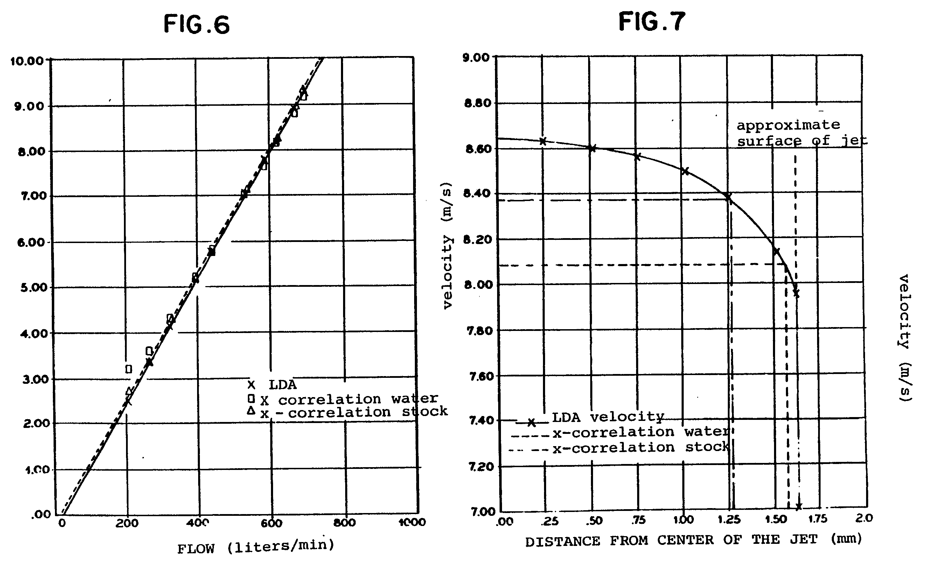

Fig. 7 illustrates a laser Doppler anemometer measured vertical velocity profile. Superimposed on this graphic illustration is the cross-correlated velocity in clear water under the same conditions. If the top

5

surface of the jet is 1.626 mm from its center, then the cross-correlated velocity at that point should be 7.95 m/s. The measured velocity is 8.08 m/s, a difference of 1.6%, which can be partially attributed to the lower surface reflection. As the solution measure becomes more opaque, this source of error becomes negligible.

The third and last source of penetration error (3) is averaging. This becomes significant in a well-seeded flow, and is actually a broader case of surface reflection error. In a fluid seated with pulp fibers or other reflecting medium, the light spot will penetrate and provide back-scatter signals from particles at various steps. The strongest signals will come from close to the surface, but the signals from different depths, moving at different velocities will introduce errors in the signal. The cross-correlation function for this signal is

$$R_{AB}(t)=\frac{1}{P(A_0+A_1+A_2+..+A_n)}\left[A_0\int_0^{\cdot P}f_A(t)f_B(t+\theta_1)dt+A_1\int_0^{\cdot P}f_A(t)f_B(t+\theta_2)dt+...+A\int_0^{\cdot P}f_A(t)\ f_B(t+\theta_n)dt\right],$$

and the averaged peak $R_{AB}(\theta')$ is

$$R_{AB}(\theta')=\frac{A_0\ R_{AB}(\theta_1)+A_1R_{AB}(\theta_2)+A_2R_{AB}(\theta_3)+...+A_nR_{AB}(\theta_n).}{A_0+A_1+A_2+...A_n}$$

The more opaque the solution, the less penetration depth and the time spread will be narrower.

Fig. 7 also shows the cross-correlated velocity for a 0.3% softwood pulp solution. The difference between the surface velocity and the measured velocity is 5.2%. This shows a much greater average penetration into the jet than the velocity in water, which would be expected with the greater velocity differential over the depth sample. This error may be desirable if the average velocity of the jet is to be measured. Increasing the power of light source 29 will provide a greater penetration, and a more realistic average of the velocity.

The following table is an error analysis summary for the above-discussed investigations.

TABLE I
Error analysis summary

| Source of error | % Uncertainty | |
|---|---|---|
| | "Normal" | "Worst case" |
| Signal processing<br>Sampling | +0.29 | +0.49 |
| Bandwidth | +0.01 | +1.67<br>(estimated) |
| Sensor positioning<br>Distance from jet | 0 | +3.13 |
| Horizontal skew | +0.06 | +3.13 |
| Vertical skew | 0 | +1.56 |
| Separation | +0.29 | +0.49 |
| Flow penetration | +1.50 | +4.39<br>(compared to<br>surface velocity) |
| Maximum % uncertainty | 2.15% | 15.59% |

If the flow penetration errors are compensated, or are desirable, the per cent uncertainty for normal operation can be brought down to 0.65%.

The following table sets forth symbols and the meanings thereof, for the symbolic elements of the above equations.

## TABLE II

| Symbol | Designation |
| --- | --- |
| A,B | Sensor positions |
| $A_0, A_1 \ldots$ | Amplification factor representing the magnitude of that portion of the backscattered signal |
| BW | Bandwidth |
| D | Distance between sensor positions |
| $j$ | The sample corresponding to the time delay $\theta$ between sensor positions |
| $k$ | A sample within the range N', corresponds to the time $t$ |
| N | Total number of samples taken |
| P | Period over which the signals are integrated |
| $R_{AB}$ | The cross-correlation function |
| $R_{xx}(0)$ | Value of the autocorrelation signal at the time t=0 |
| V | Jet velocity |
| $w$ | Spot width in the $z$ (flow) direction |
| $\phi$ | Angle sensor positions are off parallel with respect to the jet |
| $\theta$ | Time delay between the sensor positions A and B |

The calibration of the cross-correlation flowmeter against the laser Doppler anemometer is illustrated in Fig. 6. The cross-correlated velocity of water is the least accurate of the measurements and has a linearity of 0.99870. The linearity of the velocity using stock is 0.99987, which is the same as the linearity of the laser Doppler anemometer measured velocity. The error in the cross-correlated velocity is greater at the lower jet velocities, particularly in a water jet. This error is partially a result of the narrowed bandwidth due to lower frequency turbulence, and in the case of water partially due to reflection from the jet's lower surfaces. The skew of the cross-correlated velocity as compared to the laser Doppler anemometer is evident in Fig. 7. which illustrates the average penetration of the cross-correlated signals into the jet surface compared to the point at which the laser Doppler anemometer signals were collected. As the jet velocity is changed, the signal collection points within the jet will shift, skewing the final graph. Because the cross-correlation in stock is closer to the laser Doppler anemometer signal collection point than that in water, it should skew less, which is readily apparent from Fig. 7. There is less skew from the theoretical and deeper the signal penetrates into the jet.

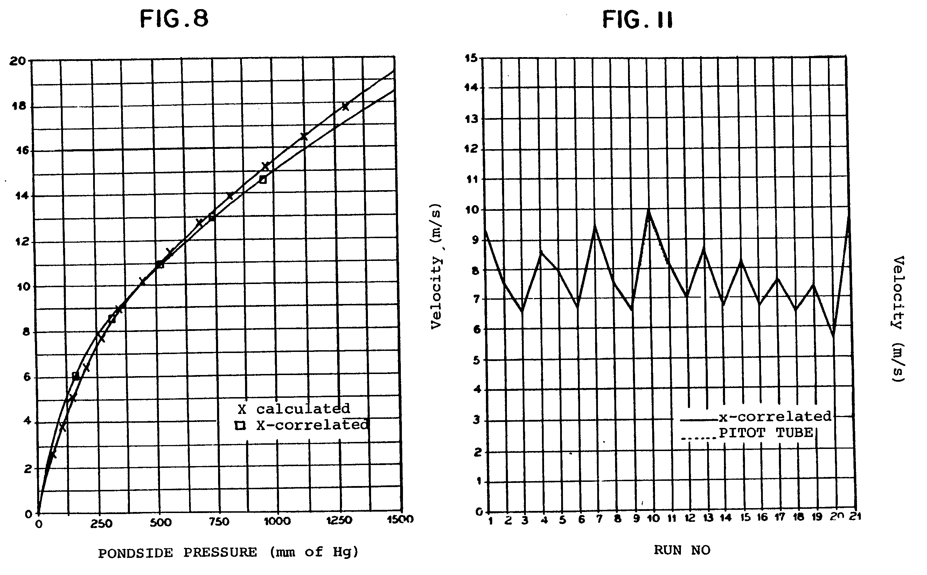

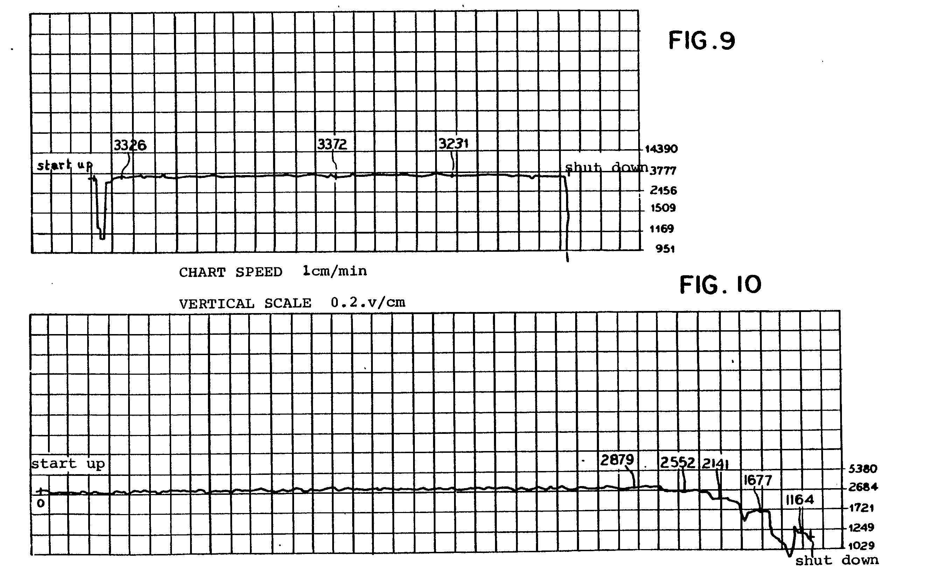

Referring to Fig. 8, the cross-correlated jet velocity is compared to the jet velocity calculated from the headbox pressure on a papermachine. As is evident, the curves are of similar shape, but there is some variation from the theoretical jet velocity. The strip chart graphs of Figs. 9 and 10, as briefly mentioned above, are of a papermachine run from startup to shutdown. These graphs illustrate the response of a device to slight changes in velocity when it is employed as a continuous read out device. Fig. 9 illustrates a continuous run, while Fig. 10 illustrates a run having the flow dropped in stages at the end of the run.

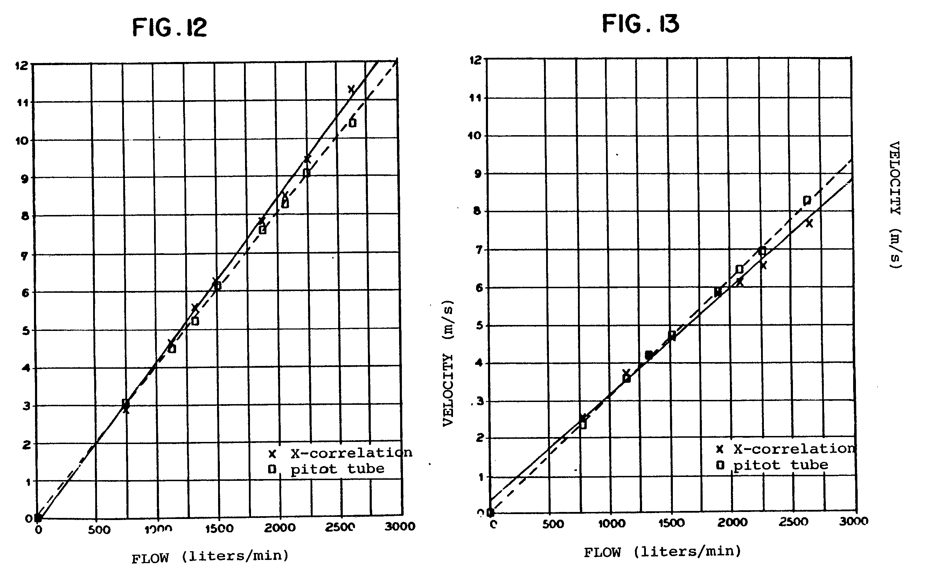

The results of the large flow loop mentioned above are illustrated in Figs. 11, 12, 13 and 14.

Fig. 11 shows a comparison of data taken over a series of 21 runs having varying flow rates and slice openings. The measurements correspond very well at the lower velocities, with some significant variations at the higher velocities. This is attributed to the result of the pitot tube measuring the center of the jet and the cross-correlation measuring the surface. At the higher jet velocities, the differential between the surface and center velocity will be greater. A linear regression analysis of this data provides a correlation coefficient of 0.9572.

Figs. 12 and 13 illustrate the jet velocity versus the quantity of flow for a machine in which the headbox has no slice lip and a 6.35 mm (1/4") slice lip, respectively. The flow rate was varied while all other conditions remain constant. The data obtained is in general correspondence with that of Fig. 11. The data illustrated on Figs. 12 and 13 have correlation coefficients of 0.9979 and 0.9987, respectively. Fig. 10 is a graphic illustration of the cross-correlation coefficients versus the velocity of the two runs of Figs. 12 and 13. As the jet velocity increases, there is less surface change between the sensor positions, and thus a greater degree of correlation. The bandwidth of the signal is also broadened by increased velocity, due to higher frequency turbulence on the jet surface.

The summarized error analysis of Table I provides the expected error for normal operation with good alignment of the sensors, and a "worst case" situation, where the signal is just short of being lost. These errors are calculated assuming a 6 mm sensor spacing with light spots of 0.5 mm diameter. The measured medium is assumed to be a relatively opaque solution travelling at a velocity between 2 and 20 meters/second. The cross-correlation is assuming 1024 samples taken over a 3 ms period.

The cross-correlation jet velocity measurement according to the present invention adequately meets the requirements for headbox jet measurement. It does not in any way disturb the jet and it can operate reliably under very adverse conditions with minimal setup and maintenance.

The accuracy appears to be better than most existing methods of measuring jet velocity when the elements are properly aligned. Even with a certain amount of mis-alignment, the signal will usually be lost before the error in the reading becomes significant.

A device constructed in accordance with the present invention measures a surface velocity. If the center velocity of the jet is desired a correlation factor is necessary. For most uses, however, the relative changes in the velocity are the most important parameters and in such applications a device constructed in accordance with the present invention is very accurate.

From the foregoing discussion, it is abundantly clear that the fiber optic elements 28 and 30 of Figs. 2 and 3 are adjustably mounted for adjustment with respect to spacing, horizontal and vertical skew and position above the headbox jet. It is also clear that the light source 29 may be varied in intensity to increase or decrease penetration into the jet.

## Claims

1. Apparatus for measuring the velocity of a liquid jet, comprising:
light generating means (29) mounted adjacent to the liquid jet (14) for generating light such that the velocity of the jet (14) is able to be determined;
first fiberoptic light coupling means (28) disposed between said light generating means (29) and the liquid jet (14) for conducting light between said light generating means (29) and the liquid jet (14);
first light sensing means (24) for sensing light reflected from the liquid jet (14) back through said first coupling means (28) and for generating a first electrical signal proportional to said light reflected back through said first coupling means (28);
second fiberoptic light coupling means (30) disposed between said light generating means (29) and the liquid jet (14), said second coupling means (30) being disposed downstream relative to said first coupling means (28) for conducting light between said light generating means (29) and the liquid jet (14);
second light sensing means (26) for sensing light reflected from the liquid jet (14) at said downstream disposition back through said second coupling means (30) and for generating a second electrical signal proportional to said light reflected back through said second coupling means (30);
analyzing means (48) operable to cross-correlate A.C. components of said first and second electrical signals for obtaining an output representing the velocity of the liquid jet (14)
characterized in that each of said first and second fiberoptic light coupling means comprises a respective one of a pair of spaced apart bifurcated first and second fiber bundles (28, 30), said first fiber bundle (28) including a first, second and third end thereof, said first end being disposed adjacent to the liquid jet (14), said second end being disposed adjacent to said first light sensing means (24) and said third end being disposed adjacent to said light generating means (29);
said second fiber bundle (30) including a first, second and third end, said first end of said second fiber bundle (30) being disposed adjacent to the liquid jet (14) at said downstream disposition thereof and downstream relative to said first end of said first fiber bundle (28), said second end of said second fiber bundle (30) being disposed adjacent to said second light sensing means (26) and said third end of said second fiber bundle (30) being disposed adjacent to said light generating means (29); the light intensity of the light generating means (29) is adjustable to vary the penetration of the light into the jet (14) and the depth at which the velocity is measured; high-pass filter means (42) are connected to said first and second light sensing means (24, 26) for filtering out components of said first and second signals below a predetermined frequency; amplifier means (44) are connected to said high-pass filter means (42) for amplifying the filtered first and second signals, said analyzing means (48) being connected to said amplifier means (44) to cross-correlate the A.C. components of the amplified first and second signals; and adjustable mounting means are connected to said first and second fiber bundles (28, 30) for permitting adjustment of the spacing between the first and second fiber bundles (28, 30) relative to the surface of the liquid jet; and said liquid jet (14) consists of pulp ejected from a paper machine headbox (10).

2. Apparatus as claimed in claim 1 wherein said light generating means is an incandescent lamp (29).

3. Apparatus as claimed in claim 1 or 2 wherein said first and second light sensing means include respectively, a first and second photo diode (24, 26), said first photo diode (24) being light-coupled to one bifurcation (34) of said first fiber bundle (28), said second photo diode (26) being light-coupled to one bifurcation (38) of said second fiber bundle (38); and the light generating means (29) are light-coupled to each of the other bifurcations (34, 36) of said fiber bundles (28, 30).

4. Apparatus as claimed in any one of the preceding claims wherein said adjustable mounting means permits adjustment of the horizontal skew of said first and second fiber bundles (28, 30).

5. Apparatus as claimed in any one of the preceding claims wherein said adjustable mounting means permits adjusting the vertical skew of said first and second fiber bundles (28, 30).

6. Apparatus as claimed in any one of the preceding claims wherein a preamplifier (40) is connected between said first and second light sensing means (24, 26) and said highpass filter means (42).

7. Apparatus as claimed in any one of the preceding claims wherein said analyzing means comprises a fast fourier transform two-channel spectrum analyzer (48).

8. Apparatus as claimed in any one of the preceding claims wherein storage means (46) are connected to said amplifier means (44) for storing data represented by said amplified first and second signals.

9. Apparatus as claimed in any one of the preceding claims wherein said analyzing means (48) are

8

connected to said amplifier means (44) for determining the delay time between the A.C. components of the first and second electrical signals by cross-correlation function comparison.

10. Apparatus as claimed in claim 7 wherein said spectrum analyzer (48) is operable in accordance with the expression

$$R_{AB}(t) = \frac{1}{P} \int_{O}^{P} f_A(t) \; f_B(t+\theta) \; dt$$

where $f_A(t)$ and $f_B(t)$ represent the A.C. components produced via said first and second coupling means (28, 30) respectively, P is a predetermined peroid of integration, $\theta$ represents the delay time between $f_A(t)$ and $f_B(t)$ and $R_{AB}(t)$ is the cross-correlation output and has a maximum of $\theta$.

## Patentansprüche

1. Vorrichtung zum Messen der Geschwindigkeit eines Flüssigkeitsstrahles mit einer in der Nachbarschaft des Flüssigkeitsstrahles (14) angeordneten Lichterzeugungseinrichtung (29) zum Erzeugen von Licht derart, daß die Geschwindigkeit des Strahles (14) bestimmt werden kann, einer zwischen der Lichterzeugungseinrichtung (29) und dem Flüssigkeitsstrahl (14) angeordneten ersten faseroptischen Lichtverbindungseinrichtung (28) zum Leiten von Licht zwischen der Lichterzeugungseinrichtung (29) und dem Flüssigkeitsstrahl (14), einer ersten Lichtfühleinrichtung (24) zum Fühlen von Licht, das von dem Flüssigkeitsstrahl (14) zurück durch die erste Verbindungseinrichtung (28) reflektiert wird, und zum Erzeugen eines ersten elektrischen Signals, das zu dem durch die erste Verbindungseinrichtung (28) zurückreflektierte Licht proportional ist, einer zwischen der Lichterzeugungseinrichtung (29) und dem Flüssigkeitsstrahl (14) angeordneten zweiten faseroptischen Lichtverbindungseinrichtung (30), die stromabwärts bezüglich der ersten Verbindungseinrichtung (28) zum Leiten von Licht zwischen der Lichterzeugungseinrichtung (29) und dem Flüssigkeitsstrahl (14) angeordnet ist, einer zweiten Lichtfühleinrichtung (26) zum Fühlen von Licht, das von dem Flüssigkeitsstrahl (14) an der stromabwärtigen Stelle zurück durch die zweite Verbindungseinrichtung (30) reflektiert wird, und zum Erzeugen eines zweiten elektrischen Signals, das zu dem durch die zweite Verbindungseinrichtung (30) zurückreflektierten Licht proportional ist, einer Analysiereinrichtung (48), die betätigbar ist, um die Wechselstromkomponenten des ersten und zweiten elektrischen Signals gegenseitig in Wechselbeziehung zu bringen, um eine Ausgabe zu erhalten, die die Geschwindigkeit des Flüssigkeitsstrahles (14) darstellt, dadurch gekennzeichnet, daß jede der ersten und zweiten faseroptischen Lichtverbindungseinrichtungen jeweils eines von einem Paar von beabstandeten gegabelten ersten und zweiten Faserbündeln (28, 30) aufweist, wobei das erste Faserbündel (28) ein erstes, zweites und drittes Ende hat, von denen das erste Ende in der Nachbarschaft des Flüssigkeitsstrahles (14) angeordnet ist, das zweite Ende in der Nachbarschaft der ersten Lichtfühleinrichtung (24) angeordnet ist und das dritte Ende in der Nachbarschaft der Lichterzeugungseinrichtung (29) angeordnet ist, wobei das zweite Faserbündel (30) ein erstes, zweites und drittes Ende hat, von denen das erste Ende des zweiten Faserbündels (30) in der Nachbarschaft des Flüssigkeitsstrahles (14) an dessen stromabwärtigen Stelle und stromabwärts bezüglich des ersten Endes des ersten Faserbündels (28) angeordnet ist, das zweite Ende des zweiten Faserbündels, (30) in der Nachbarschaft der zweiten Lichtfühleinrichtung (26) angeordnet ist und das dritte Ende des zweiten Faserbündels (30) in der Nachbarschaft der Lichterzeugungseinrichtung (29) angeordnet ist, wobei die Lichtintensität der Lichter- . zeugungseinrichtung (29) verstellbar ist, um die Eindringung des Lichts in den Strahl (14) und die Tiefe, in der die Geschwindigkeit gemessen wird, zu verändern, eine Hochpassfiltereinrichtung (42) mit der ersten und zweiten Lichtfühleinrichtung (24, 26) verbunden ist, um unter einer vorbestimmten Frequenz liegende Komponenten des ersten und zweiten Signals auszufiltern, eine Verstärkereinrichtung (44) mit der Hochpassfiltereinrichtung (42) verbunden ist, um das gefilterte erste und zweite Signal zu verstärken, wobei die Analysiereinrichtung (48) mit der Verstärkereinrichtung (44) verbunden ist, um die Wechselstromkomponenten des verstärkten ersten und zweiten Signals gegenseitig in Wechselbeziehung zu bringen, und eine verstellbare Befestigungseinrichtung mit dem ersten und zweiten Faserbündel (28, 30) verbunden ist, um die Einstellung des Abstandes zwischen dem ersten und zweiten Faserbündel (28, 30) bezüglich der Oberfläche des Flüssigkeitsstrahles zu gestatten, und der Flüssigkeitsstrahl (14) aus Pulpe besteht, die aus einem Stoffauflaufkasten (10) einer Papiermaschine ausgestoßen wird.

2. Vorrichtung nach Anspruch 1, bei der die Lichterzeugungseinrichtung eine Glühlampe (29) ist.

3. Vorrichtung nach Anspruch 1 oder 2, bei der die ersten und zweite Lichtfühleinrichtung jeweils eine erste und zweite Lichtdiode (24, 26) aufweist, von denen die erste Lichtdiode (24) mit einer Abzweigung (34) des ersten Faserbündels (28) lichtgekoppelt ist und die zweiten Lichtdiode (26) mit einer Abzweigung (38) des zweiten Faserbündels (38) lichtgekoppelt ist, und die Lichterzeugungseinrichtung (29) mit jeder der anderen Abzweigungen (34, 36) der Faserbündel (28, 30) lichtgekoppelt ist.

4. Vorrichtung nach einem der vorhergehenden Ansprüche, bei der die verstellbare Befestigungseinrichtung die Verstellung der horizontalen Schräge des ersten und zweiten Faserbündels (28, 30) gestattet.

# EP 0 150 658 B1

5. Vorrichtung nach einem der vovhergehenden Ansprüche, bei der die verstellbare Befestigungseinrichtung die Verstellung der vertikalen Schräge des ersten und zweiten Faserbündels (38, 30) gestattet.

6. Vorrichtung nach einem der vorhergehenden Ansprüche, bei der ein Vorverstärker (40) zwischen die erste und zweite Lichtfühleinrichtung (24, 26) und die Hochpassfiltereinrichtung (42) geschaltet ist.

7. Vorrichtung nach einem der vorhergehenden Ansprüche, bei der die Analysiereinrichtung einen Zweikanalspektralanalysator (48) für eine schnelle Fouriertransformation aufweist.

8. Vorrichtung nach einem der vorhergehenden Ansprüche, bei der eine Speichereinrichtung (46) mit der Verstärkereinrichtung (44) verbunden ist, um Daten zu speichern, die von den verstärkten ersten und zweiten Signalen dargestellt werden.

9. Vorrichtung nach einem der vorhergehenden Ansprüche, bei der die Analysiereinrichtung (48) mit der Verstärkereinrichtung (44) verbunden ist, um die Verzögerungszeit zwischen den Wechselstromkomponenten des ersten und zweiten elektrischen Signals durch Wechselbeziehungsfunktionsvergleich zu bestimmen.

10. Vorrichtung nach Anspruch 7, bei der der Spektralanalysator (48) in Übereinstimmung mit dem Ausdruck

$$R_{AB}(t) = \frac{1}{P} \int_{O}^{P} f_A(t)\ f_B(t+\theta)\ dt$$

betätigbar ist, wobei $f_A(t)$ und $f_B(t)$ die über die erste und zweite Verbindungseinrichtung (28, 30) jeweils erzeugten Wechselstromkomponenten darstellen, P eine vorbestimmte Integrationsperiode ist, $\theta$ die Verzögerungszeit zwischen $f_A(t)$ und $f_B(t)$ darstellt und $R_{AB}(t)$ die Wechselbeziehungsausgabe ist und ein Maximum von $\theta$ hat.

## Revendications

1. Appareil pour mesurer la vitesse d'un jet de liquide comportant:

des moyens de générer de la lumière (29) montés de manière adjacente au jet de liquide (11) pour générer une lumière telle que la vitesse du jet (14) puisse être déterminée;

des premiers moyens de couplage à fibres optiques (28) placés entre les dits moyens de générer de la lumière (29) et le jet de liquide (14), pour amener la lumière desdits moyens de générer de la lumière (29) au jet de liquide (11);

des premiers moyens de détection de la lumière (24) pour capter la lumière réfléchie par le jet de liquide (14), par l'intermédiaire des dits premiers moyens de couplage (28), et pour générer un premier signal électrique proportionnel à la dite lumière réfléchie par l'intermédiaire des dits premiers moyens de couplage (28);

des seconds moyens de couplage à fibres optiques (30) placés entre les dits moyens de générer de la lumière (29) et le jet de liquide (14), les dits seconds moyens de couplage (30) étant installés en aval des dits premiers moyens de couplage (28) pour amener la lumière des dits moyens de générer de la lumière (29) au jet de liquide (14);

des seconds moyens de détection de la lumière (26) pour capter la lumière réfléchie par le jet de liquide (14) à la dite position en aval, par l'intermédiaire des dits seconds moyens de couplage (30) et pour générer un deuxième signal électrique proportionnel à la dite lumière réfléchie par l'intermédiaire des dits seconds moyens de couplage (30);

des moyens d'analyse (48) permettant d'intercorréler les composants C.A. des dits premiers et seconds signaux électriques pour obtenir une sortie représentant la vitesse du jet de liquide (14).

caractérisé en ce que chacun des dits premiers et seconds moyens de couplage à fibres optiques comporte l'un d'un premier et d'un second faisceaux de fibres (28, 30) espacés et bifurqués, le dit premier faisceau de fibres (28) comportant une première, une deuxième et une troisième extrémités, la dite première extrémité étant contiguë au jet de liquide (14), la dite deuxième extrémité étant contiguë aux dits premiers moyens de détection de la lumière (24) et la dite troisième extrémité étant contiguë aux dits moyens de générer de la lumière (29);

le dit second faisceau de fibres (30) comportant une première, une deuxième et une troisième extrémité, la dite première extrémité du dit second faisceau de fibres (30) étant contiguë au jet de liquide (14) à la dite position et aval de celui-ci et en aval par rapport à la dite première extrémité du dit premier faisceau de fibres (28), la dite deuxième extrémité du dit second faisceau de fibres (30) étant contiguë aux dits seconds moyens de détection de la lumière (26) et la dite troisième extrémité du dit second faisceau de fibres (30) étant contiguë aux dits moyens de générer de la lumière (29); l'intensité lumineuse des moyens de générer de la lumière (29) est réglable afin de faire varier la pénétration de la lumière dans le jet (14), et la profondeur à laquelle la vitesse est mesurée; des moyens de filtrage passe-haut (42) sont connectés aux dits premiers et seconds moyens de détection de la lumière (24, 26) pour éliminer par filtrage les composants des dits premiers et seconds signaux en dessous d'une fréquence prédéterminée; des moyens d'amplification (44) sont connectés aux dits moyens de filtrage passe-haut (42) pour amplifier les premiers et seconds signaux filtrés, les dits moyens d'analyse (48) étant connectés aux dits moyens d'amplification (44) pour établir une intercorrélation entre les composants C.A. des premiers et seconds signaux amplifiés; et des moyens de montage réglables sont connectés aux dits premiers et seconds faisceaux de fibres (28, 30) pour permettre le réglage de l'écartement entre le premier et le second faisceaux de fibres (28, 30) par rapport à la surface du jet de liquide; et le dit jet de liquide (14) consiste en pulpe éjectée d'une caisse de tête (10) de machine à papier.

2. Appareil selon la revendication 1 dans lequel les dits moyens de générer de la lumière consistent en une lampe à incandescence (29).

3. Appareil selon la revendication 1 ou 2 dans lequel les dits premiers et seconds moyens de détection de la lumière comportent respectivement une première et une seconde photodiodes (24, 26), la dite première photodiode (24) étant couplée optiquement à une bifurcation (34) du dit premier faisceau de fibres (28), la dite seconde photodiode (26) étant couplée optiquement à une bifurcation (38) du dit second faisceau de fibres (38); et les moyens de générer de la lumière (29) sont couplés optiquement à chacune des autres bifurcations (34, 36) des dits faisceaux de fibres (28, 30).

4. Appareil selon l'une des revendications précédentes, dans lequel les dits moyens de montage réglables permettent le réglage de l'inclinaison horizontale des dits premiers et seconds faisceaux de fibres (28, 30).

5. Appareil selon l'une des revendications précédentes, dans lequel les dits moyens de montage réglables permettent le réglage de l'inclinaison verticale des dits premiers et seconds faisceaux de fibres (28, 30).

6. Appareil selon l'une des revendications précédentes, dans lequel un préamplificateur (40) est placé entre les dits premiers et seconds moyens de détection de la lumière (24, 26) et les dits moyens de filtrage passe-haut (42).

7. Appareil selon l'une des revendications précédentes, dans lequel les dits moyens d'analyse comportent un analyseur de spectre rapide à transformation de Fourier à deux voies (48).

8. Appareil selon l'une des revendications précédentes, dans lequel les moyens de stockage (46) sont connectés aux dits moyens d'amplification (44) pour stocker des données représentées par les dits premiers et seconds signaux amplifiés.

9. Appareil selon l'une des revendications précédentes, dans lequel les dits moyens d'analyse (48) sont connectés aux dits moyens d'amplification (44) pour déterminer le temps de retard entre les composants C.A. des premiers et seconds signaux électriques par comparaison des fonctions d'intercorrélation.

10. Appareil selon la revendication 7, dans lequel le dit analyseur de spectre (48) peut fonctionner suivant la formule:

$$R_{AB}(t) = \frac{1}{P} \int_{O}^{P} f_A(t)\ f_B(t+\theta)\ dt$$

dans laquelle $f_A(t)$ et $f_B(t)$ représentent les composants C.A. obtenus via les dits premiers et seconds moyens de couplage (28, 30) respectivement, P est une période d'intégration prédéterminée, 0 représente le temps de retard entre $f_A(t)$ et $f_B(t)$ est le résultat de l'intercorrélation et a un maximum de $\theta$.

## FIG. 1

headbox
jet

A

B

D

flow

## FIG. 2

20 29 24 preamplifier

40

22

A B 26

12 14 16

10

18

high pass filter 42

amplifier

44

spectrum analyzer

48

46

data recorder

## FIG. 3

preamplifier

40

24 29 26

34 32 36 38

20

28 30

A B

spacing
and
skew
adjust

## FIG. 4

Z

X

A

D

B

V

## FIG. 5

A

φ

B

V

$D \cos \phi$

# FIG.6

x LDA
□ X correlation water
△ x - correlation stock

FLOW (liters/min)

# FIG.7

approximate
surface of jet

—x— LDA velocity
– – – – x-correlation water
– · – · – x-correlation stock

DISTANCE FROM CENTER OF THE JET (mm)

velocity (m/s)

velocity (m/s)

EP 0 150 658 B1

FIG. II

Velocity (m/s)

Velocity, (m/s)

x-correlated
....... PITOT TUBE

RUN NO

FIG. 8

X calculated
□ X-correlated

PONDSIDE PRESSURE (mm of Hg)

3

EP 0 150 658 B1

FIG.9

start up    3326          3372          3231          shut down 14390
                                                              3777
                                                              2156
                                                              1509
                                                              1169
                                                              951

CHART SPEED    1cm/min

VERTICAL SCALE    0.2.v/cm

FIG. 10

start up

0                                                    2879  2552 2141        5380
                                                                    1677    2684
                                                                        1164 1721
                                                                              1249
                                                                              1029
                                                          shut down

VELOCITY (m/s)

FIG. I3

FLOW (liters/min)

x X-correlation
□ pitot tube

VELOCITY (m/s)

FIG. I2

FLOW (liters/min)

x X-correlation
□ pitot tube

5

FIG.14

FIG.15

EP 0 150 658 B1

FIG. 17

VELOCITY (m/s)

x—x CORRELATED VELOCITY
Δ XCC (Y-axis o to 1)

DEGREE SKEWED

VELOCITY (m/s)

FIG. 16

x—x correlated velocity
Δ XCC (Y-axis is o to 1)

DEGREE SKEWED

EP 0 150 658 B1

7